Europäisches Patentamt

**European Patent Office**

Office européen des brevets

(11) Veröffentlichungsnummer: **0 242 522 B1**

# EUROPÄISCHE PATENTSCHRIFT

(45) Veröffentlichungstag der Patentschrift: **29.05.91**

(51) Int. Cl.⁵: **A61C 19/04**, G01B 7/00, A61B 5/11

(21) Anmeldenummer: **87102158.0**

(22) Anmeldetag: **16.02.87**

(54) **Vorrichtung zur Messung des Ortes, der Lage und/oder der Orts- bzw. Lageänderung eines starren Körpers im Raum.**

(30) Priorität: **27.02.86 DE 3606446**

(43) Veröffentlichungstag der Anmeldung:
**28.10.87 Patentblatt 87/44**

(45) Bekanntmachung des Hinweises auf die
Patenterteilung:
**29.05.91 Patentblatt 91/22**

(84) Benannte Vertragsstaaten:
**DE FR GB IT**

(56) Entgegenhaltungen:
**EP-A- 0 004 888       EP-A- 0 012 282
DE-A- 3 103 367       DE-A- 3 312 245
FR-A- 2 449 442       US-A- 3 390 459**

(73) Patentinhaber: **Siemens Aktiengesellschaft
Wittelsbacherplatz 2
W-8000 München 2(DE)**

(72) Erfinder: **Nickel, Bernd, Dipl.-Ing.
Goldregenstrasse 2
W-6143 Lorsch(DE)**

## Beschreibung

Die Erfindung bezieht sich auf eine Vorrichtung zur Messung des Ortes, der Lage und/oder der Orts- bzw. Lageänderung eines starren Körpers im Raum, mit einem ein Magnetfeld erzeugenden Sendesystem und einem mit einem Empfangssystem, welches mehrere, an einem am Körper befestigbaren Halteteil angeordnete und Magnetfeldsensoren tragende Empfangselemente enthält, sowie mit einer Auswerteelektronik, welche die vom Empfangssystem erhaltenen Signale in der Position von wenigstens einem Punkt des Körpers entsprechende Größen umwandelt.

Eine solche Vorrichtung ist beispielsweise in der DE-A-28 52 764 beschrieben. Die Vorrichtung wird vorzugsweise in der Gnathologie eingesetzt und dient dort insbesondere zur Messung der Bewegung des Unterkiefers eines Patienten. Bei der bekannten Vorrichtung ist am Körper (Unterkiefer) ein Felderzeuger in Form eines gekreuzten Dauermagneten vorgesehen, der ein definiertes, unregelmäßiges Feld erzeugt. Zur Erfassung des Feldflusses bzw. einer Feldflußänderung während einer Messung sind an einem gegenüber dem Körper ortsfesten Teil, z.B. am Patientenkopf, im Abstand vom Felderzeuger mehrere Magnetflußaufnehmer vorgesehen, und zwar in Form von stabförmigen Antennen, die paarweise in drei zueinander senkrechten Ebenen angeordnet sind. Die von den Magnetflußaufnehmern registrierten Feldflußänderungen werden in elektrische Signale verwandelt, die in einer Signalauswerteeinrichtung entsprechend verarbeitet werden und als Ergebnis eine der Lage und/oder einer Lageänderung des Körpers entsprechende Größe liefern. Bei der bekannten Vorrichtung geht man davon aus, daß man neben der Translationsbewegung in den drei Ebenen x, y, z unter Ausnutzung der Asymmetrie des durch den Felderzeuger erzeugten asymmetrischen Feldes auch entsprechende Rotationssignale (Winkel $\alpha$, $\beta$, $\gamma$) gewinnen kann.

Insbesondere in der Gnathologie hat es sich gezeigt, daß der Felderzeuger, welcher bei der bekannten Vorrichtung am Unterkiefer des Patienten befestigt wird, bestimmte Dimensionen nicht überschreiten darf, soll die Kaufunktion während eines Meßvorganges nicht beeinträchtigt werden. Ein weiteres Erfordernis ist, daß der Zugang zum Meßobjekt, also zum Patientenmund, in ausreichendem Maße gesichert sein muß und daß die Bewegungsfreiheit des Unterkiefers durch die Anordnung der Magnetflußaufnehmer nicht beeinträchtigt sein darf. Um insbesondere letzteres sicherzustellen, sind die Magnetflußaufnehmer vergleichsweise weit vom Felderzeuger anzuordnen. Eine solche Anordnung hat jedoch zur Folge, daß sich bezüglich der Rotationsbewegung des Kiefers sehr kleine Nutzsignale ergeben, die häufig durch Störungen elektrischer oder magnetischer Art, z.B. durch Rauschen der Auswerteelektronik, Einfluß von Störfeldern aus der Umwelt etc., überdeckt werden und im Vergleich zu den Signalen, die aus der Translationsbewegung erhalten werden, letztlich nicht die erwünschte Genauigkeit bei der Ermittlung anderer Punktbewegungen, z.B. der Kondylenbahn bei Kaubewegungen, erbringen.

Aus der DE-OS 33 12 245 ist ein Gerät zur Diagnose von Unterkieferbewegungen bekannt, bei dem die Bewegung des Unterkiefers mit Hilfe dreier Meßpunkte erfaßt wird. Hierzu ist am Kopf des Patienten ein Band angebracht, das an drei verschiedenen Punkten Positionsdetektoren in einer vorbestimmten Relativlage mit Bezug auf den Oberkiefer fixiert. Den Positionsdetektoren zugeordnet sind Spot- oder Punktlichtquellen, die von einem Bügel getragen werden und in vorbestimmter gegenseitiger Relativlage gehalten sind. Die Punktlichtquellen entsprechen den Meßpunkten; sie bestimmen eine den Unterkiefer darstellende Ebene. Der Bügel wird über ein Kupplungsstück mit Bezug auf den Unterkiefer des Patienten festgelegt. Die Punktlichtquellen werden von einer Hauptlichtquelle aus über Lichtleiter mit Licht versorgt.

Mit dem Gerät kann also mit Hilfe optischer Hilfsmittel die Unterkieferbewegung erfaßt werden. Zwecks Reproduktion der Unterkieferbewegung wird diese in die Bewegung von drei Reproduktionsbezugspunkten umgesetzt, die den einzelnen Meßpunkten entsprechen. Die hieraus resultierende Bewegung wird unter Verwendung eines Unterkiefermodells entsprechend wiedergegeben.

Ein wesentlicher Nachteil dieses bekannten Verfahrens ist, daß die Informationsgeber, also die Lichtquellen, außerhalb der Mundhöhle und damit außerhalb des Patientenkopfes, angeordnet sein müssen, denn Medien, wie Licht oder Schall können das Gewebe nicht bzw. nicht unverfälscht durchdringen.

Auch ein mechanisches Verfahren, wie es aus der DE-OS 30 02 267 bekannt ist und welches ebenfalls mit drei Meßpunkten arbeitet, hat den Nachteil, daß die natürliche Kaufunktion durch gewichtsbelastete Apparaturen und eventuell notwendige Kraftaufwendungen des Patienten beeinträchtigt und die hieraus gewonnenen Ergebnisse verfälscht werden.

Aus der DE-A-31 03 367 ist eine Einrichtung zur punktuellen Messung des Abstandes zwischen zwei beweglichen Grenzflächen von Objekten bekannt, die in der Human- und Veterinärmedizin vornehmlich zur Bestimmung der Muttermundsweite bei Entbindungen vorgesehen ist. Die Einrichtung enthält zwei identische Sende- und Empfangssonden in Form von jeweils drei senkrecht zueinander ausgerichteten und sich überkreuzenden Doppelspulen. Die Sendesonde wird mit einer sinusförmigen Spannung von 50 kHz im Multiplexverfahren erregt, d.h. die Spulen werden zeitlich versetzt zueinander angesteuert. Demnach erfolgt auch ein zeitlich versetztes Messen.

Die bekannte Einrichtung ist sowohl vom Aufbau der Sende- und Empfangssonden als auch von der Verarbeitung der Signale her gesehen nicht dazu geeignet, relativ schnelle Bewegungen, wie z.B. Kaubewegungen eines Patienten, erfassen zu können.

Der im Anspruch 1 angegebenen Erfindung liegt die Aufgabe zugrunde, eine Vorrichtung anzugeben, mit der relativ rasche Bewegungen eines Körpers, insbesondere Unterkieferbewegungen eines Patienten, unter Vermeidung der oben erwähnten Nachteile erfaßt werden können, wobei eine vollständige und genaue Erfassung der Lage und/oder Bewegung dieses im Raum bewegten Körpers erzielt werden soll.

Das Empfangssystem kann bei Verwendung von Hallgeneratoren aus einem Antennensystem bestehen, das ähnlich aufgebaut ist wie in der eingangs erläuterten Patentanmeldung P 28 52 764. Vorteilhafterweise besteht das Empfangssystem jedoch aus Magnetfeldsensoren in Form von senkrecht zueinander angeordneten Magnetspulen, welche die Wechselfelder entsprechend der drei Betriebsfrequenzen, die die Sendeelemente erzeugen, aufnehmen.

Durch die Verwendung von Magnetspulen als Empfangselemente eröffnet sich damit die Möglichkeit, das Sendesystem entweder am Meßobjekt oder an einem demgegenüber ortsfesten Befestigungsteil und das Empfangssystem korrespondierend dazu anzuordnen.

Obgleich man in der Wahl der Anordnung des Empfangs- und Sendesystems frei ist, so ist es doch insbesondere bei Anwendung der Vorrichtung in der Gnathologie vorteilhaft, den passiven Teil, also das Empfangssystem, nicht dem ortsfesten Befestigungsteil (Patientenkopf), sondern dem beweglichen Teil (Unterkiefer) zuzuordnen. Bei dieser Anordnung eröffnet sich nämlich die Möglichkeit, die Sendeleistung nahezu beliebig steigern zu können, wodurch sich äußere Störeinflüsse leichter ausschalten lassen. Außerdem ist man in der Gestaltung des Wechselfelderzeugers ungebundener als bei der umgekehrten Anordnung. Dies ist insbesondere von Bedeutung, um die Lage der Felderzeuger optimal bezüglich der Linearität der gewonnenen Signale des Sende/Empfangssystems anpassen zu können.

Der Sender besteht vorteilhafterweise aus drei im wesentlichen über die Kieferbreite bzw. über die Öffnungsweite des Patientenmundes sich erstreckenden, stromdurchflossenen Leitern, wobei jeder Leiter aus einem oder mehreren Einzelleitern bestehen kann.

Obgleich die Leiter an sich beliebig am Unterkiefer angeordnet werden können, so ist es doch vorteilhaft, diese in einer Ebene und bezüglich ihrer Längsachsen senkrecht bzw. parallel zueinander anzuordnen. Zweckmäßigerweise sind die Leiter Teil eines Kopf- oder Brillengestells bzw. einem solchen zugeordnet.

Das Empfangssystem besteht vorteilhafterweise aus drei vorzugsweise kugelförmig ausgebildeten Empfangselementen, die vorteilhafterweise so angeordnet sind, daß sie eine Ebene definieren, also nicht kollinear sind. Jedes Empfangselement enthält einen Spulenkörper aus nicht ferromagnetischem Material, auf dem jeweils drei senkrecht zueinander angeordnete Spulen angebracht sind. Die Windungen der Spulen sind zweckmäßigerweise in entsprechende Rillen des Spulenkörpers eingelegt. Letzterer kann eine Kugel-, Quader- oder eine andere geeignete Form besitzen. Die drei Spulenkörper sind auf einem den Zahnbogen entsprechenden bügelförmigen Trägerelement in einem vorgegebenen, an sich beliebig wählbaren, jedoch festen Abstand zueinander angeordnet. Die Befestigung am Unterkiefer kann mittels geeigneter Haftmittel erfolgen.

Die von den Empfangselementen aufgenommenen Signale werden einer Auswerteelektronik zugeführt, die aus den Größen der Magnetfelder nach der allgemeinen Beziehung

$$H = \frac{n \cdot I}{2 \cdot \pi \cdot r}$$

Informationen über die Bewegung der drei Meßpunkte ableiten, wobei

n = Anzahl der stromdurchflossenen Leiter

J = Stromstärke und

r = direkter Abstand Sender/Empfänger

sind. Die Auswerteelektronik kann sowohl als diskretes Bauelement ausgebildet sein, ebenso kann auch ein dafür handelsüblicher geeigneter Elektronenrechner eingesetzt werden.

Vorteilhaft ist es, den einen Meßpunkt in die Mitte zwischen den beiden vorderen Schneidezähnen einer Zahnreihe (Incisalpunkt) zu legen, weil dort die größte Translationsbewegung zu erwarten ist. Obwohl man bereits mit einem einzelnen Meßpunkt bestimmte funktionelle Aussagen über die Kaufunktion eines Patienten erhalten kann, lassen sich unter Einbeziehung der beiden anderen Meßpunkte darüber hinaus Informationen über die Bewegung eines jeden beliebigen Punktes am Unterkiefer erhalten bzw. errechnen, insbesondere Informationen über die Bewegung der Kondylenbahn.

Wie an sich beispielsweise durch die eingangs genannte DE-33 12 245 bekannt, ist es vorteilhaft,mit den gewonnenen Informationen ein Gebißmodell dreidimensional im Raum zu bewegen. Hierzu sind vorteilhafterweise entsprechend der Anordnung der Meßwertaufnehmer am Gebißmodell entsprechende Lagerstellen vorgesehen für motorische Antriebe, die entsprechend den gewonnenen Meßsignalen angesteuert werden.

Eine Ausführungsform der Erfindung wird nachfolgend anhand der Zeichnung näher erläutert. Es zeigen:

Figur 1 eine Ausführungsform der Erfindung zur Messung der Kieferbewegung eines Patienten,
Figur 2 einen Ausschnitt aus Figur 1,
Figur 3 einen Teil des Senders in schaubildlicher Darstellung,
Figur 4 einen Empfänger in stark vergrößerter schaubildlicher Darstellung,
Figur 5 eine geometrische Darstellung zur Erläuterung der Beziehung Sender/Empfänger,
Figur 6 eine Vektordarstellung,
Figur 7 eine Prinzipschaltung zur Auswertung der Signale,
Figur 8 eine Prinzipanordnung zur Steuerung eines Kiefergebißmodells in schaubildlicher Darstellung.

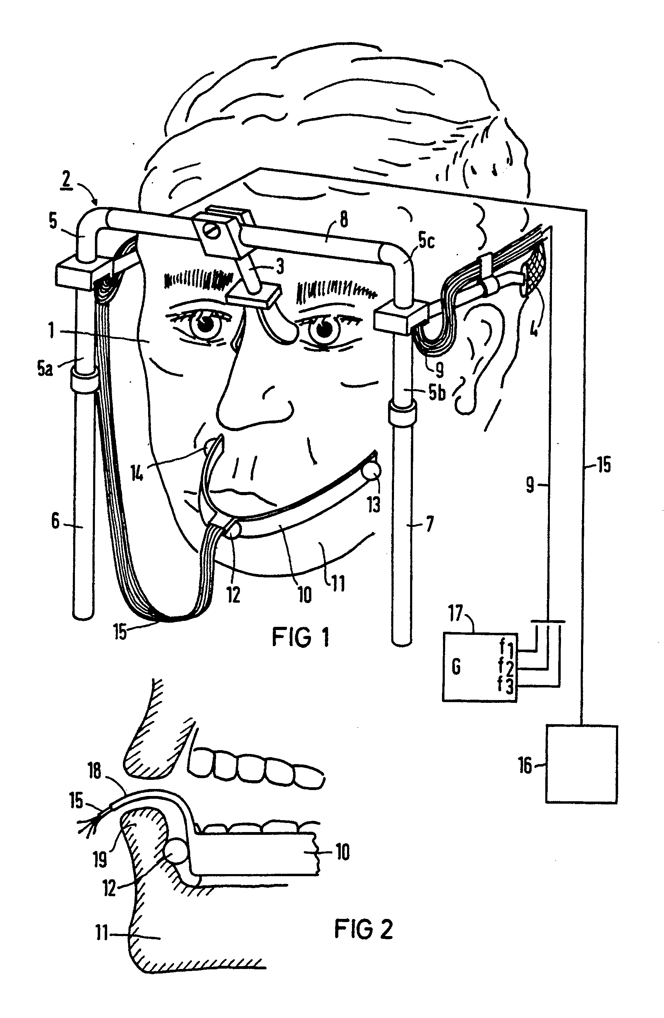

Die Figur 1 zeigt in einer schaubildlichen Darstellung ein Ausführungsbeispiel einer Vorrichtung der erfindungsgemäßen Art, die zur Messung der Unterkieferbewegung eines Patienten bestimmt ist. An einem Patientenkopf 1 ist ein Kopfgestell 2 vorgesehen, welches in geeigneter Weise z.B. mittels eines Nasenabstützgliedes 3 und eines Gurtbandes 4 am Patientenkopf befestigt ist. Das Kopfgestell 2 enthält einen n - förmigen Rahmen 5, dessen Schenkel 5a, 5b, 5c zueinander rechtwinkelig angeordnet sind und in einer Ebene liegen. Der Rohrrahmen 5 enthält stabförmige Sendeelemente 6, 7, 8, die entsprechend der Schenkelanordnung, bezogen auf ihre Längsachsen, ebenfalls jeweils senkrecht zueinander bzw. parallel zueinander angeordnet sind und in einer Ebene liegen. Die Zuführung elektrischer Energie erfolgt mittels eines mehradrigen Kabels 9, welches in geeigneter Weise innerhalb des Rohrrahmens 5 verlegt ist.

Am beweglichen Teil, also am Unterkiefer 11 des Patienten, ist ein dem Kiefer angepaßtes bügelförmiges Halteteil 10 mit Hilfe eines geeigneten Haftmittels, z.B. mittels Abdruckmasse befestigt. Am bügelförmigen Halteteil 10 sind drei Empfangselemente 12, 13, 14 befestigt, und zwar so, daß sie einen fest definierten Abstand zueinander haben. Die Anordnung ist an sich beliebig, zweckmäßigerweise bilden jedoch die drei Empfangselemente die Eckpunkte eines Dreiecks, vorzugsweise eines gleichschenkligen Dreiecks, wobei das vordere Empfangselement 12 mittig zwischen den beiden vorderen Schneidezähnen (im Incisalpunkt) zu liegen kommt. Damit läßt sich bezüglich der Translationsbewegung ein relativ großes Signal erzeugen. Die von den drei Empfangselementen 12, 13, 14 wegführenden Signalleitungen sind zu einem Flachbandkabel 15 zusammengefaßt. Während das Signalkabel 15 zu einer Auswerteelektronik 16 führt, ist das Zuführungskabel 9 mit einem Wechselstromgenerator 17 verbunden, der Wechselstrom mit drei verschiedenen Betriebsfrequenzen $f_1$, $f_2$ und $f_3$ erzeugt. Die drei Betriebsfrequenzen liegen in einem Bereich > 10 kHz. Es sei darauf hingewiesen, daß der besseren Übersichtlichkeit wegen die Energiezuführung und Signalableitung jeweils nur einlinig dargestellt ist; in der Praxis führen von jedem Empfangselement aus mehrere Leitungen zur Auswerteelektronik.

Um zu vermeiden, daß das Kabel 15 auf der Unterlippe des Patienten aufliegt und diesen dadurch gegebenenfalls daran hindert, eine natürliche Kaubewegung durchzuführen, ist das Kabel 15 in einem am Halteteil 10 befestigten starren Führungsröhrchen 18 geführt. Das Führungsröhrchen 18 ist, wie aus Figur 2 zu entnehmen ist, so gebogen, daß es das Kabel 15 über die mit 19 bezeichnete Unterlippe des Patienten hebt.

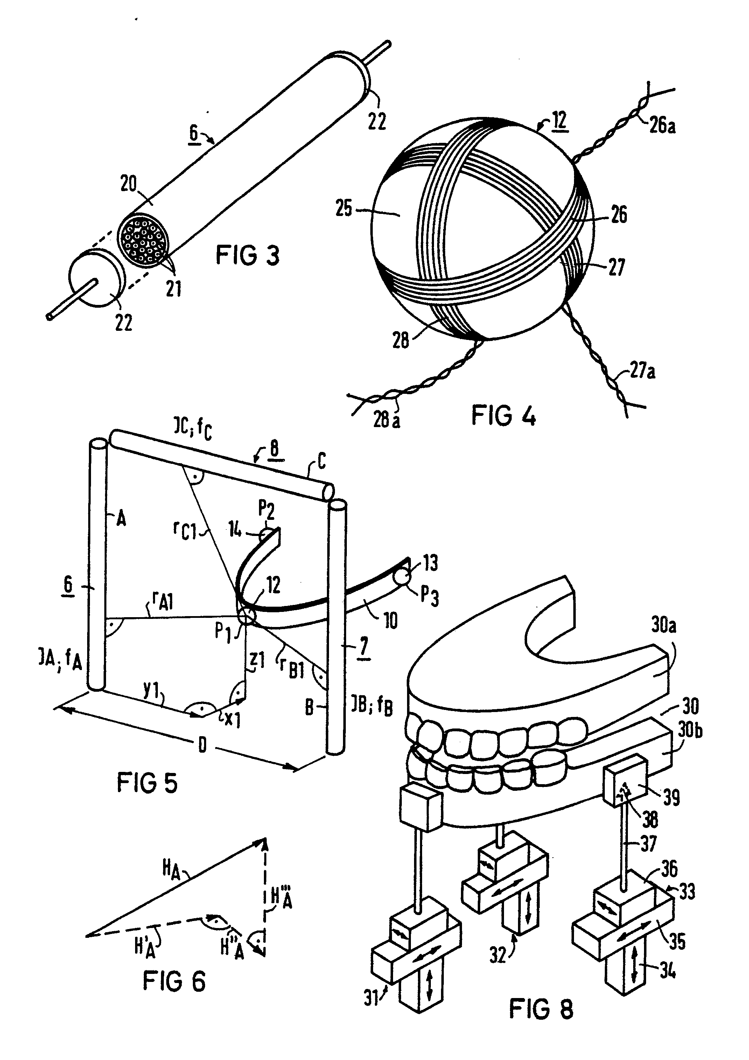

Anhand der Figur 3 wird der Aufbau der Sendeelemente erläutert, und zwar am Beispiel des Sendeelementes 6. Das Sendeelement 6 enthält ein äußeres Hüllrohr 20, das entweder Teil des bügelförmigen Rohrrahmens 5 oder auch ein separates, am Schenkel 5a des Rahmens 5 befestigtes Rohr sein kann. Im Rohr 20 sind mehrere (vorzugsweise 20) elektrische Einzelleiter 21 parallel zueinander verlaufend angeordnet, deren beide Enden durch geeignete Verbindungselemente 22 elektrisch miteinander verbunden sind. Die Einzelleiter 21 werden, wie später noch näher erläutert, vom Wechselstromgenerator 17 aus gespeist und erzeugen bei Stromfluß ein elektrisches Wechselfeld. Die Leiter- bzw. Rohrlänge ist an sich beliebig, sie muß nur sehr viel größer sein als der wirksame Durchmesser, also der Durchmesser der gesamten im Rohr vereinten Leiter. Im vorliegenden Anwendungsfall ist es vorteil-haft, die Länge der Sendeelemente 6 bis 8 so zu bemessen, daß sie die Öffnungsweite des Mundes bzw. die Kieferbreite überdecken.

Anhand der Figur 4 wird die Ausbildung der Empfangselemente 12 bis 14 am Beispiel des Empfangselements 12 näher erläutert. Jedes Empfangselement besteht aus einem Spulenkörper 25 (von etwa 4 mm Durchmesser) aus nicht ferromagnetischem Werkstoff und darauf um jeweils 90° zueinander versetzt angeordneten Spulen 26, 27 und 28, deren Anschlüsse 26a, 27a, 28a in geeigneter Weise im bügelförmigen Halteteil 10, auf dem die Spulenkörper befestigt sind, nächst getrennt bis zum Austritt aus dem Patientenmund und dann als gemeinsames Signalkabel 15 zur Auswerteelektronik 16 geführt sind.

Der Spulenkörper 25 hat zur Aufnahme der Windungen der Spulen 26 bis 28 der Spulenbreite entsprechende Rillen, in die die Windungen ein- oder mehrlagig eingelegt sind. Der Spulenkörper kann, wie dargestellt, kugelförmig sein, denkbar sind auch andere geeignete Formen, z.B. eine Quaderform, in der die entsprechenden Rillen zur Aufnahme der Spulenwindungen eingearbeitet sind.

Anhand der Figuren 5 bis 7 wird das Meß- und Auswerteprinzip näher erläutert. Dabei sind der besseren Übersichtlichkeit wegen die den Sendeelementen 6 bis 8 zugeordneten Ströme (I), Frequenzen (f) und Felder (H) jeweils mit den Kennbuchstaben A für das Sendeelement 6, B für das Sendeelement 7 und C für das Sendeelement 8 versehen.

Der Wechselstromgenerator 17 speist die drei Sendeelemente 6, 7, 8 mit jeweils unterschiedlicher Betriebsfrequenz $f_A$, $f_B$, $f_C$ . Die drei Betriebsfrequenzen liegen dabei oberhalb 10 kHz. Dabei werden die Sendeelemente 6 bis 8 bzw. die in ihnen enthaltenen Leiter 21 von einem Strom $I_A$, $I_B$ und $I_C$ durchflossen. Der Stromfluß erzeugt um die Leiter bzw. um die Sendeelemente herum ein Magnetfeld $H_A$, $H_B$, $H_C$, für das folgender allgemeiner Zusammenhang gilt:

$$H = \frac{n \cdot I}{2 \cdot \pi \cdot r}$$

wobei n die Anzahl der vorhandenen stromdurchflossenen Leiter, r jeweils der direkte Abstand des stromdurchflossenen Leiters (Senders) von einem Meßpunkt P, an dem das Wechselfeld gemessen wird, also der Abstand vom Sender zu einem Empfangselement ist.

Aus der angegebenen Beziehung ist zu entnehmen, daß bei konstantem Strom I das Magnetfeld H nur vom Abstand r, also vom Abstand Sender zu Empfangselement (= Meßpunkt), abhängt.

Um in den Meßpunkten (P1, P2, P3) entsprechend der Lage der Empfangselemente 12 bis 14 die von den Sendeelementen abgegebenen magnetischen Wechselfelder exakt zu messen, sind, an jedem Empfangselement drei Spulen (26, 27, 28 in Figur 3) im rechten Winkel zueinander angeordnet.

In Verbindung mit Figur 5 wird deutlich, daß die drei Sender A, B, C ein Magnetfeld $H_A$, $H_B$, $H_C$ erzeugen, mit, bezogen auf das Empfangselement 12 im Meßpunkt P1, jeweils dem Abstand $r_{A1}$, $r_{B1}$ und $r_{C1}$.

Der Sender A mit dem Sendeelement 6 erzeugt beispielsweise am Meßpunkt P1, der die Koordinaten $x_1$, $y_1$, $z_1$ in einem Koordinatensystem x, y, z hat, das Feld $H_A$. Dieses Feld $H_A$, dessen Größe und Richtung in Figur 6 durch den Vektor $H_A$ definiert ist, kann in die Komponenten $H_A'$, $H_A''$ und $H_A'''$ zerlegt werden, wobei gilt, daß

$$H_A'' \perp H_A'$$
$$H_A''' \perp H_A'' \quad \text{und}$$
$$H_A''' \perp H_A'$$

Aus der mathematischen Beziehung

$$H_A = \sqrt{(H_A')^2 + (H_A'')^2 + (H_A''')^2} = \frac{n \cdot I_A}{2 \cdot \pi \cdot r_{A1}}$$

erkennt man den Zusammenhang zwischen dem Magnetfeld ($H_A$) und der Entfernung Sender/Empfänger ($r_A$) für den betreffenden Meßpunkt (P1). Daraus geht gleichfalls hervor, daß die Messung des Magnetfeldes $H_A$ nicht von der Lage des Empfangselements (12) im Meßpunkt (P1) abhängt.

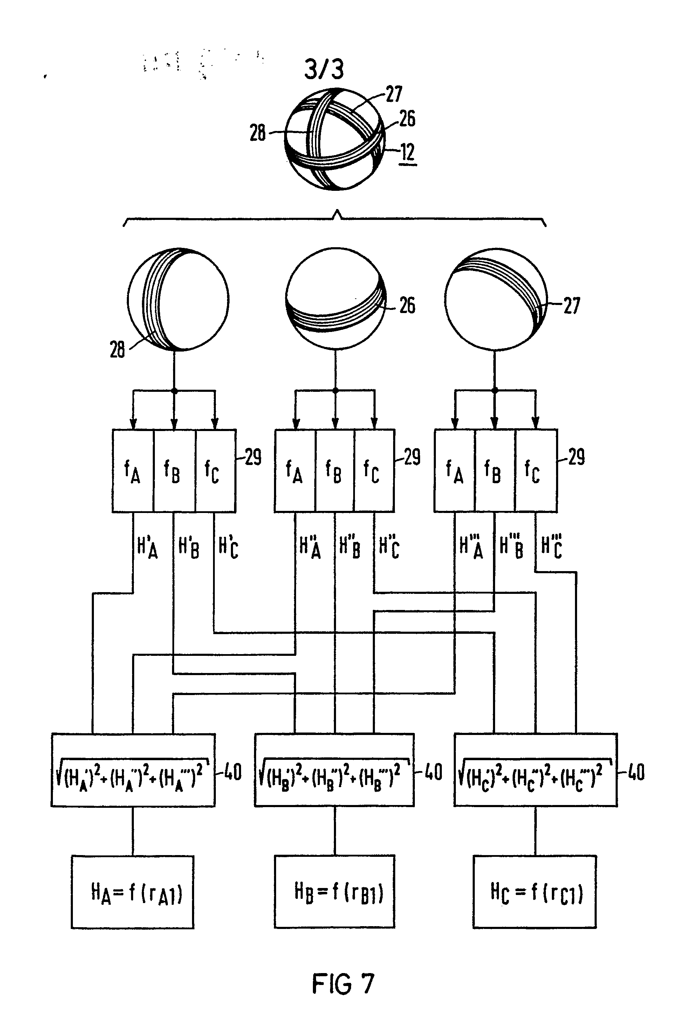

Entsprechend wird zur Ermittlung von $r_{B1}$ und $r_{C1}$ verfahren. Dies geschieht in Betrachtung des Operationsschaltbildes nach Figur 7 dadurch, daß die von den einzelnen Spulen (26 bis 28) eines Empfängers (12) aufgenommenen Signale zunächst in Frequenzfiltern 29 entsprechend den Frequenzen $f_A$, $f_B$, $f_C$ voneinander getrennt und dann in Operationsrechnern 40 in der oben erläuterten Weise verarbeitet werden, wobei als Ergebnis der Rechenoperation die Feldstärke (H) als Funktion des Abstandes (r) des Senders von der Meßstelle erhalten wird. Die Werte für $r_A$, $r_B$ und $r_C$ lassen sich, unter Anwendung an sich bekannter Koordinaten-Transformationen, in jedes beliebige Koordinatensystem umrechnen, z.B. entsprechend der Darstellung in Figur 5 in ein kartesisches mit den Koordinaten x, y, z.

Mit den drei Empfängern 12 bis 14 am Unterkiefer gewinnt man so neun Informationen über die Bewegung der Meßpunkte P1, P2, P3. Nachdem die drei Meßpunkte P1, P2, P3 durch die feste Zuordnung der Empfänder zum Haltebügel 10 geometrisch festliegen, kann durch die erhaltenen Signale x, y, z in den drei Meßpunkten die Bewegung des Unterkiefers vollständig beschrieben werden.

Die Auswerteelektronik 16, die aus den Größen der Magnetfelder Information über die Bewegung der drei Meßpunkte auswertet, kann sowohl als diskretes Bauelement ausgebildet sein; ebenso kann auch ein dafür geeigneter handelsüblicher Elektronenrechner eingesetzt werden.

Obwohl es grundsätzlich möglich ist, mit einem einzelnen Meßpunkt bestimmte funktionelle Aussagen über die Kaufunktion eines Patienten zu erhalten, hat die Einbeziehung der zwei anderen Meßpunkte darüber hinaus den Vorteil, daß die Bewegung eines beliebigen Punktes am Unterkiefer ermittelt werden kann, insbesondere auch die Bewegung der Kondylenbahn.

Darüber hinaus ist es möglich, wie in an sich bekannter Weise bereits schon realisiert, mit den erhaltenen Informationen ein Gebißmodell dreidimensional im Raum zu bewegen. Eine solche Anordnung ist im Prinzip in Figur 8 in schaubildlicher Darstellung aufgezeigt.

Ein Gebißmodell 30 besteht aus einem ortsfesten Oberkieferteil 30a und einem demgegenüber beweglich angeordneten Unterkieferteil 30b. Das Unterkieferteil 30b ist dreidimensional beweglich gelagert und enthält an den Punkten, an denen im Empfangssystem (Figur 1) die drei Empfangselemente 12 bis 14 angeordnet sind, Bewegungsübertrager 31 bis 33. Diese Bewegungsübertrager enthalten jeweils drei in zueinander senkrechten Ebenen wirkende Antriebe 34, 35, 36 sowie einen Übertragungsstift 37, der mittels einer Spitzenlagerung 38 mit einem fest mit dem Unterkiefermodell 30b verbundenen Übertragunselement 39 verbunden ist. Die drei Antriebe 34 bis 36 erhalten Informationen über den einen Punkt, beispielsweise Punkt P2, und werden entsprechend den erhaltenen Informationen in den drei Ebenen verstellt. Diese Verstellbewegung wird über den Übertragungsstift und das Spitzenlager auf das Unterkiefermodell weitergegeben. Entsprechendes gilt für die zwei anderen Bewegungsübertrager 31 und 32. Mit den aus der vorbeschriebenen Anordnung erhaltenen Meßwerten läßt sich die Bewegung des Gebißmodells exakt nachvollziehen.

## Ansprüche

**1.** Vorrichtung zur Messung des Ortes, der Lage und/oder der Orts- bzw. Lageänderung eines starren Körpers im Raum, mit einem ein Magnetfeld erzeugenden Sendesystem und mit einem Empfangssystem, welches mehrere, an einem am Körper befestigbaren Halteteil (10) angeordnete und Magnetfeldsensoren (26, 27, 28) tragende Empfangselemente (12, 13, 14) enthält, sowie mit einer Auswerteelektronik (16), welche die vom Empfangssystem erhaltenen Signale in der Position von wenigstens einem Punkt (P1, P2, P3) des Körpers entsprechende Größen (x, y, z) umwandelt, **dadurch gekennzeichnet,** daß das Sendesystem aus wenigstens drei rechtwinkelig zueinander angeordneten, von einem Wechselstromgenerator (17) mit unterschiedlicher Betriebsfrequenz (f1, f2, f3) gespeisten, stromdurchflossenen Elementen (6, 7, 8) besteht, daß jedes Empfangselement (12, 13, 14) mehrere, senkrecht zueinander angeordnete Magnetfeldsensoren (26, 27, 28) zur Aufnahme des Wechselfeldes des Sendesystems aufweist, deren erzeugtes magnetisches Wechselfeld von den jeweils senkrecht zueinander angeordneten Magnetfeldsensoren (26, 27, 28) des Empfangssystems aufgenommen wird, und daß die Auswerteelektronik (16) so ausgebildet ist, daß in ihr die aus jedem Empfangselement kommenden Signale nach den Frequenzen der Wechselfelder der aus den drei unterschiedlichen Wechselfeldern erhaltenen Signale getrennt ausgewertet werden.

**2.** Vorrichtung nach Anspruch 1, **dadurch gekennzeichnet,** daß die Empfangselemente (12, 13, 14) des Empfangssystems an dem zu messenden (beweglichen) Körper und die Sendelemente (6, 7, 8) das Sendesystem demgegenüber ortsfest gehaltert sind.

3. Vorrichtung nach Anspruch 1, **dadurch gekennzeichnet,** daß die Magnetfeldsensoren Magnetspulen (26, 27, 28) sind, welche auf einem Spulenkörper (25) aus nichtferromagnetischem Material jeweils senkrecht zueinander angeordnet sind.

4. Vorrichtung nach Anspruch 3, **dadurch gekennzeichnet,** daß der Spulenkörper (25) der Spulenbreite der Magnetspulen (26, 27, 28) entsprechende Rillen aufweist, in die die Windungen der Magnetspulen ein- oder mehrlagig eingelegt sind.

5. Vorrichtung nach Anspruch 3, **dadurch gekennzeichnet,** daß der Spulenkörper (25) kugelförmig ausgebildet ist.

6. Vorrichtung nach Anspruch 3, **dadurch gekennzeichnet,** daß zur Messung der Unterkieferbewegung eines Patienten drei mit Magnetspulen (26, 27, 28) versehene Empfangselemente (12, 13, 14) auf einem dem Zahnbogen entsprechenden bügelförmigen Halteteil (10) in einem vorgegebenen festen Abstand zueinander angeordnet sind.

7. Vorrichtung nach Anspruch 6, **dadurch gekennzeichnet,** daß die Empfangselemente (12, 13, 14) in einer Ebene liegen und in ihrer Anordnung die Eckpunkte eines gleichschenkeligen Dreiecks bilden.

8. Vorrichtung nach Anspruch 7, **dadurch gekennzeichnet,** daß das eine Sendeelement (12) an der dem Incisalpunkt des Zahnbogens entsprechenden Stelle am Halteteil (10) angeordnet ist.

9. Vorrichtung nach Anspruch 3, **dadurch gekennzeichnet,** daß die von den Magnetspulen (26, 27, 28) wegführenden Signalleitungen (15) entlang des Halteteils (10) und im Bereich des Austritts am Patientenmund in einem ein Berühren der Unterlippe (19) durch die Signalleitungen vermeidenden Führungsteil (18) geführt sind.

10. Vorrichtung nach Anspruch 1, **dadurch gekennzeichnet,** daß das Sendesystem drei in einer Ebene angeordnete, stromdurchflossene Leiter (6, 7, 8) enthält.

11. Vorrichtung nach Anspruch 10, **dadurch gekennzeichnet,** daß jeder Leiter (6, 7, 8) aus mehreren Einzelleitern (21) gebildet ist, die von einem Hüllrohr (20) umgeben sind und deren Enden elektrisch miteinander verbunden (22) sind.

12. Vorrichtung nach Anspruch 11, **dadurch gekennzeichnet,** daß das Hüllrohr (20) Teil eines am Patientenkopf befestigbaren Kopfgestells (5) ist.

13. Vorrichtung nach Anspruch 10, **dadurch gekennzeichnet,** daß die stromdurchflossenen Leiter (6, 7, 8) in einer Ebene und bezüglich ihrer Längsachsen senkrecht bzw. parallel zueinander angeordnet sind.

14. Vorrichtung nach Anspruch 6 und 10, **dadurch gekennzeichnet,** daß die Leiter (6, 7, 8) eine Länge aufweisen, die etwa der der Kieferbreite bzw. der Öffnungsweite eines Patientenmundes entspricht.

15. Vorrichtung nach Anspruch 1, **dadurch gekennzeichnet,** daß die Auswerteelektronik (16) den drei verschiedenen Betriebsfrequenzen ($f_1$, $f_2$, $f_3$) entsprechende Frequenzfilter (29) enthält, aus denen den Positionen der Meßpunkte (P1, P2, P3) entsprechende Größen (x, y, z) erhalten werden.

16. Vorrichtung nach Anspruch 6, **dadurch gekennzeichnet,** daß zur dreidimensionalen Darstellung der Unterkiefernachbildung (30b) eines Gebißmodells (30) Verstellantriebe (34, 35, 36) vorhanden sind, die mit den aus den Meßpunkten (P1, P2, P3) gewonnene Signalen angesteuert werden.

## Claims

1. A device for measuring the location, the attitude and/or the location or attitude alteration of a rigid body in space, with a transmitting system generating a magnetic field, and with a receiving system, which comprises several receiving elements (12, 13, 14), carrying magnetic field sensors (26, 27, 28) and arranged on a holding part (10) secured to the body, as well as with an evaluating electronic system (16), which converts the signals received by the receiving system into magnitudes (x, y, z) corresponding to the position of at least to one point (P1, P2, P3) of the body, characterised in that the transmitting system consists of at least three current-carrying elements (6, 7, 8), arranged at right angles to each other and fed by an alternating current generator (17) with various operational frequencies (f1, f2, f3), in that each receiving element (12, 13, 14) has several magnetic field sensors (26, 27, 28), arranged perpendicularly to each other, for receiving the alternating field of the transmitting system, the generated alternating magnetic field of which (sensors) is picked up by the respective magnetic field sensors (26, 27, 28) arranged perpendicularly to each other, of the receiving system, and in that the evaluating electronic system (16) is so constructed that in it the signals coming from each receiving element are evaluated separately according to the frequencies of the alternating fields from the signals obtained from the three varying alternating fields.

2. A device according to claim 1, characterised in that the receiving elements (12, 13,14) of the receiving system are held on the (mobile) body to be measured and the transmitting elements (6, 7,8) of the transmitting system are held stationary relative to this.

3. A device according to claim 1, characterised in that the magnetic field sensors are magnetic coils (26, 27, 28), which are arranged together on one coil bobbin (25) of non-ferromagnetic material in each case perpendicularly to each other.

4. A device according to claim 3, characterised in that the coil bobbin (25) has grooves corresponding to the coil width of the magnetic coils (26, 27, 28), into which the windings of the magnetic coils are laid in one or more layers.

5. A device according to claim 3, characterised in that the coil bobbin (25) is spherical.

6. A device according to claim 3, characterised in that for measuring the lower jaw movement of a patient three receiving elements (12, 13,14) provided with magnetic coils (26, 27, 28) are arranged on a bracket-shaped holding part (10), corresponding to the dental arch at a preset fixed distance from each other.

7. A device according to claim 6, characterised in that the receiving elements (12, 13, 14) lie in one plane and form in their arrangement the vertices of an isosceles triangle.

8. A device according to claim 7, characterised in that a transmitting element (12) is arranged at the point on the holding part (10) corresponding to the incisive point of the dental arch.

9. A device according to claim 3, characterised in that the signal conductors (15) leading away from the magnetic coils (26, 27, 28) are guided along the holding part (10) and in the region of the exit at the patient's mouth in a guide part (18) avoiding contact of the signal conductors with the lower lip (19).

10. A device according to claim 1, characterised in that the transmitting system contains three current-carrying conductors (6, 7, 8) arranged in one plane.

11. A device according to claim 10, characterised in that each conductor (6, 7, 8) is formed from several individual conductors (21), which are surrounded by a sleeve tube (20) and the ends of which are electrically connected (22) to each other.

12. A device according to claim 11, characterised in that the sleeve tube (20) is part of a head frame (5) secured on the patient's head.

13. A device according to claim 10, characterised in that the current-carrying conductors (6, 7, 8) are arranged in one plane, and relative to their longitudinal axes, perpendicular or parallel to each other.

14. A device according to claim 6 and 10, characterised in that the conductors (6, 7, 8) have a length which corresponds approximately to the jaw width or the opening width of a patient's mouth.

15. A device according to claim 1, characterised in that the evaluating electronic system (16) contains

8

frequency filters (29) corresponding to the three different operational frequencies ($f_1$, $f_2$, $f_3$), from which the magnitudes (x, y, z) corresponding to the attitudes of the measuring points (P1, P2, P3) are obtained.

16. A device according to claim 6, characterised in that for three-dimensional representation of the lower jaw simulation (30b) of a dentition model (30) adjusting drives (34, 35, 36) are present, which are controlled with the signals obtained from the measuring points (P1, P2, P3).

## Revendications

1. Dispositif pour mesurer la position, l'orientation et/ou la variation de la position ou de l'orientation d'un corps rigide dans l'espace, comportant un système d'émission produisant un champ magnétique et un système de réception qui comporte plusieurs éléments de réception (12,13,14) disposés sur un élément de support (10) pouvant être fixée sur le corps, et portant des sondes magnétiques (26,27,28), ainsi qu'un système électronique d'évaluation (16), qui convertit les signaux reçus par le système de réception en des grandeurs (x,y,z) correspondant à la position d'au moins un point (P1,P2,P3) du corps, caractérisé par le fait que le système d'émission est constitué par au moins trois éléments (6,7,8) parcourus par un courant, qui sont perpendiculaires entre eux et sont alimentés par un générateur de courant alternatif (17) produisant des fréquences de service différentes (f1,f2,f3), que chaque élément de réception (12,13,14) comporte plusieurs sondes magnétiques (26,27,28) disposées perpendiculairement entre elles et servant à détecter le champ magnétique du système d'émission, dont le champ magnétique alternatif produit est détecté par les sondes magnétiques (26,27,28) du système de réception, qui sont disposées respectivement perpendiculairement entre elles, et que le système électronique d'évaluation (16) est agencé de telle sorte que les signaux délivrés par chaque élément de réception sont évalués séparément dans ce dispositif, en fonction des fréquences des signaux obtenus à partir des trois champs alternatifs différents.

2. Dispositif suivant la revendication 1, caractérisé par le fait que les éléments de réception (12,13,14) du système de réception sont fixés sur le corps à mesurer (mobile) et les éléments d'émission (6,7,8) du système d'émission sont maintenus fixes par rapport à ce corps.

3. Dispositif suivant la revendication 1, caractérisé par le fait que les sondes magnétiques sont des bobines magnétiques (26,27,28), qui sont disposées sur un corps porte-bobines (25) réalisé en un matériau non ferromagnétique.

4. Dispositif suivant la revendication 3, caractérisé par le fait que le corps porte-bobines (25) possède des rainures qui correspondent à la largeur des bobines magnétiques (26,27,28) et dans lesquelles les spires des bobines magnétiques sont insérées suivant une ou plusieurs couches.

5. Dispositif suivant la revendication 3, caractérisé par le fait que le corps porte-bobines (25) possède une forme sphérique.

6. Dispositif suivant la revendication 3, caractérisé par le fait que pour la mesure du déplacement de la mâchoire inférieure d'un patient, trois éléments de réception (12,13,14) équipés de bobines magnétiques (26,27,28) sont disposés à une distance prédéterminée fixe les uns par rapport aux autres sur un élément de support en forme d'étrier (10), qui correspond à l'arc dentaire.

7. Dispositif suivant la revendication 6, caractérisé par le fait que les éléments de réception (12,13,14) sont situés dans un plan et forment, de par leur disposition, les sommets d'un triangle isocèle.

8. Dispositif suivant la revendication 7, caractérisé par le fait qu'un élément d'émission (12) est disposé, sur l'élément de support (10), à l'emplacement, qui correspond à la zone des incisives de l'arc dentaire.

9. Dispositif suivant la revendication 3, caractérisé par le fait que les lignes de transmission de signaux (15), qui partent des bobines magnétiques (26,27,28), sont disposées le long de l'élément de support (10) et dans la zone de la sortie au niveau de la bouche du patient, dans une partie de guidage (18) qui évite un contact des lignes de transmission de signaux avec la livre inférieure (19).

10. Dispositif suivant la revendication 1, caractérisé par le fait que le système d'émission contient trois conducteurs (6,7,8) parcourus par un courant et disposés dans un plan.

11. Dispositif suivant la revendication 10, caractérisé par le fait que chaque conducteur (6,7,8) est formé par plusieurs conducteurs individuels (21), qui sont entourés par un tube enveloppe (20) et dont les extrémités sont raccordées électriquement entre elles (22).

12. Dispositif suivant la revendication 11, caractérisé par le fait que le tube enveloppe (20) fait partie d'une structure (5) pouvant être fixée sur la tête du patient.

13. Dispositif suivant la revendication 10, caractérisé par le fait que les conducteurs (6,7,8) parcourus par un courant sont disposés dans un plan de telle sorte que leurs axes longitudinaux sont perpendiculaires ou parallèles entre eux.

14. Dispositif suivant les revendications 6 et 10, caractérisé par le fait que les conducteurs (6,7,8) possèdent une longueur correspondant approximativement à celle de la largeur de la mâchoire ou la largeur d'ouverture de la bouche d'un patient.

15. Dispositif suivant la revendication 1, caractérisé par le fait que le dispositif électronique d'évaluation (16) contient des filtres de fréquences (29), qui correspondent aux trois fréquences de service différentes ($f_1$,$f_2$,$f_3$), à partir desquelles on obtient des grandeurs (x,y,z) qui correspondent aux positions des points de mesure (P1,P2,P3).

16. Dispositif suivant la revendication 6, caractérisé par le fait que pour la représentation tridimensionnelle de la simulation (30b) de la mâchoire inférieure d'un modèle de dentition (30), il est prévu des dispositifs d'entraînement (34,35,36) permettant un réglage, et qui sont commandés par les signaux obtenus à partir des points de mesure (P1,P2,P3).

FIG 1

FIG 2

FIG 3

FIG 4

FIG 5

FIG 6

FIG 8

3/3

$$\sqrt{(H_A')^2+(H_A'')^2+(H_A''')^2}$$

$$\sqrt{(H_B')^2+(H_B'')^2+(H_B''')^2}$$

$$\sqrt{(H_C')^2+(H_C'')^2+(H_C''')^2}$$

$$H_A = f(r_{A1})$$

$$H_B = f(r_{B1})$$

$$H_C = f(r_{C1})$$

FIG 7